(19) Europäisches Patentamt
European Patent Office
Office européen des brevets

(11) **EP 1 813 644 A1**

(12) **EUROPEAN PATENT APPLICATION**
published in accordance with Art. 158(3) EPC

(43) Date of publication:
**01.08.2007 Bulletin 2007/31**

(21) Application number: **05806698.6**

(22) Date of filing: **18.11.2005**

(51) Int Cl.:
*C08J 9/04* (2006.01)  *C08F 10/06* (2006.01)
*C08K 7/02* (2006.01)  *C08L 23/10* (2006.01)

(86) International application number:
**PCT/JP2005/021282**

(87) International publication number:
**WO 2006/054715 (26.05.2006 Gazette 2006/21)**

(84) Designated Contracting States:
**DE FR GB**

(30) Priority: **19.11.2004 JP 2004336680**

(71) Applicant: **Prime Polymer Co., Ltd.**
**Tokyo 105-7117 (JP)**

(72) Inventors:
• **SUGAWARA, Minoru**
**Ichihara-shi, Chiba 299-0193 (JP)**

• **OTSUKI, Yasuhiko**
**Ichihara-shi, Chiba 299-0193 (JP)**
• **TSUNORI, Ryoichi**
**Ichihara-shi, Chiba 299-0193 (JP)**

(74) Representative: **Gille Hrabal Struck Neidlein Prop Roos**
**Brucknerstrasse 20**
**40593 Düsseldorf (DE)**

(54) **EXTRUDED PROPYLENE RESIN FOAM AND PROCESS FOR PRODUCING EXTRUDED PROPYLENE RESIN FOAM**

(57) The extruded propylene-based resin foam according to the present invention is extruded propylene-based resin foam that is formed by extrusion-foaming a propylene-based resin, and the extruded propylene-based resin foam has the expansion ratio of 10 or more and the average cell diameter of less than 400 μm. In addition, the extruded foam contains a 60 or less wt% fibrous filler in relation to the whole molding material. With this configuration, the extruded foam can have a plurality of foam cell walls therein. Thus, the extruded foam can efficiently block external radiant heat, thereby realizing excellent insulation efficiency. Furthermore, because the fibrous filler is oriented along the thickness direction, even when the extruded foam is slightly strained in the thickness direction, a high stress arises, thereby improving energy-absorbing capability.

FIG.1

EP 1 813 644 A1

**Description**

TECHNICAL FIELD

The present invention relates to extruded propylene-based resin foam and a method of producing the extruded propylene-based resin foam.

BACKGROUND ART

Extruded foam molded by extrusion-foaming a thermoplastic resin and an assembly of bundled threads of the extruded foam molded by a so-called strand-extrusion involving the steps of extruding the thermoplastic resin from dies having a large number of small pores; bundling extruded resin threads together; and fusing and foaming the surfaces thereof are excellent in mechanical properties even though light in weight. Therefore, the foam is broadly applied as structural materials in various fields, such as the fields of building construction, civil engineering and the fields of automobiles. As such extruded foam of a thermoplastic resin, extruded foam containing polypropylene-based resins is known. The extruded foam containing polypropylene-based resins is required to have high impact-absorbing capabilities (energy-absorbing capabilities) as well as high insulation efficiency because the foam is to be used in various fields, such as the fields of building construction, civil engineering and the fields of automobiles. For example, when the extruded foam is used for a ceiling, door, and the like of a automobile, the foam is required to have a capability of absorbing impact energy at the time of a collision or the like as well as high insulation efficiency.

As extruded polypropylene-based resin foam that has these two performances, for example, there is provided an assembly of bundled threads of extruded foam made of a polypropylene-based resin(i.e., a structural material of the resin foam), the structural material having a biaxial extensional viscosity of $3 \times 10^6$ poises or more and a biaxial strain hardening rate of 0.25 or more at a biaxial extensional strain of 0.2 (see, Patent Document 1). In such extruded polypropylene-based resin foam, by using a polypropylene-based resin having a biaxial extensional viscosity of $3 \times 10^6$ poises or more at a biaxial extensional strain of 0.2, an average foam cell diameter is reduced to be in a range of 0.4 mm or more to 2.0 mm or less. Additionally, in such extruded foam, a foam cell film is prevented from being torn and the insulation efficiency and energy-absorbing capability are improved.

[Patent Document 1] JP 9-25354 A

DISCLOSURE OF THE INVENTION

PROBLEMS TO BE SOLVED BY THE INVENTION

Insulation efficiency of the extruded foam depends on both the expansion ratio and the cell diameter at a certain range of expansion ratio (for example, 10 or more). In other words, a higher expansion ratio leads to an enhanced insulation efficiency because the thinner a material wall is, the smaller a heat-transfer amount is. Similarly, when the cell diameter is reduced with the same expansion ratio, the number of foam cell walls blocking radiant heat increase, so that less heat is conducted, thereby improving heat insulation properties. Accordingly, the smaller cell diameter is preferred. As described above, in a state where expansion ratio is made high, when an average cell diameter is made small to improve the heat insulation efficiency, a thickness of molded product can be reduced, which also brings an additional effect of cost reduction. Therefore, there has been a need of an improved expansion ratio and a decreased cell diameter.

However, although such a conventional extruded propylene-based resin foam as disclosed in the above-mentioned patent documents can provide an improvement of expansion ratio to some extent, it is difficult to reduce the average cell diameter to less than 400 $\mu$m. Thus, it is difficult to attain a sufficient improvement in the insulation efficiency by use of the conventional foam.

It is an object of the present invention to provide extruded propylene-based resin foam and a method for producing the extruded propylene-based resin foam, the extruded foam having an excellent energy absorbing capability in which an average diameter of cells therein can be reduced while a high expansion ratio remains high, thereby providing an excellent insulation efficiency.

MEANS FOR SOLVING THE PROBLEMS

Extruded propylene-based resin foam according to an aspect of the present invention is extruded foam that is produced by extrusion-foaming a molding material containing a propylene-based resin, the extruded propylene-based resin foam having:

an expansion ratio of 10 or more; and
an average cell diameter of less than 400 $\mu$m, wherein
the molding material contains a fibrous filler, and
a content of the fibrous filler is 60 or less wt%.

The extruded propylene-based resin foam according to the aspect of the present invention has the expansion ratio of 10 or more and the average cell diameter of less than 400 $\mu$m, so that a large number of foam cell walls can be formed in the extruded foam, thereby efficiently blocking radiation heat from the outside. As a result, extruded foam excellent in insulation efficiency can be provided.

A propylene-based resin constituting the extruded foam has not only an excellent recycling performance, but also a favorable chemical resistance, heat-resistance, and the like. Accordingly, the extruded propylene-based resin foam according to the present invention also has such properties (recycling performance, chemical resistance, and heat-resistance). Further, the use of the propylene-based resin that is a low cost material makes it possible to provide extruded foam having the above-mentioned effects at low cost.

Further, the extruded propylene-based resin foam of the present invention contains a 60 or less wt% fibrous filler. This fibrous filler is arranged at random due to foam cells in the extruded propylene-based resin foam. Specifically, the fibrous filler is not only arranged such that the fiber-length direction thereof is arranged along the extruding direction of the extruded propylene-based resin foam, but is also arranged along a thickness direction due to the presence of foam cells. Therefore, even when the extruded propylene-based resin foam is slightly strained in the thickness direction thereof, a high stress arises, thereby improving the energy-absorbing capability.

Further, the content of fibrous filler is preferably in the range of 5 or more wt% to 30 or less wt%. When the content is less than 5 wt%, an improvement of the energy-absorbing capability may not be sufficient. When the content is more than 30 wt% on the other hand, the fibrous filler protrudes from the wall surface of the foam cell, which may result in problems such as a degraded insulation efficiency due to a decrease in closed cell content and a degraded foam moldability.

Note that when the content of the fibrous filler exceeds 60 wt%, the foam moldability is degraded. In this state, the fibrous filler protrudes from the wall surface of the foam cell, which causes a decrease in the closed cell content, and insulation efficiency is degraded.

According to the aspect of the present invention, 20 or more % of total fibers of the fibrous filler are preferably oriented in a thickness direction that is substantially perpendicular to an extruding direction of the extruded propylene-based resin foam.

According to this aspect of the present invention, 20 or more % of the fibrous filler is arranged along the thickness direction of the extruded propylene-based resin foam, so that the resin foam will have a high energy-absorbing capability. Note that the expression "fibrous filler arranged in a thickness direction" herein refers to a state where an angle at which the length direction of the fiber is arranged to an axis of the thickness direction is within a range of 0 degree or more (parallel to the thickness direction) to 45 degrees or less.

In addition, according to the aspect of the present invention, a closed cell content is preferably 40 or more %. According to this aspect of the present invention, the extruded propylene-based resin foam has a closed cell content of 40 or more %, so that a large number of the foam cells prevent the heat from being transferred. Thus, the extruded foam has an enhanced insulation efficiency, excellent mechanical strengths such as an impact strength, and an excellent moisture resistance.

In the extruded propylene-based resin foam according to the aspect of the present invention, the average cell diameter is preferably 200 $\mu$m or less.

According to this aspect of the present invention, the extruded propylene-based resin foam has the average cell diameter is further reduced to 200 $\mu$m or less, so that more foam cell walls can be formed in the extruded foam. Therefore, the extruded foam has more excellent insulation efficiency.

The extruded propylene-based resin foam according to this aspect of the present invention is preferably an assembly of bundled threads of an extruded foam, in which a plurality of extrusion-foamed threads are bundled.

According to this aspect of the present invention, the extruded propylene-based resin foam is formed as an assembly of bundled threads where a large number of threads of the extruded foam are bundled together. Accordingly, the expansion ratio of the extruded foam can be enhanced. Therefore, it is easy to mold a molded foam product having a high expansion ratio and a sufficient thickness in various forms.

In the extruded propylene-based resin foam according to the aspect of the present invention, the propylene-based resin constituting the foam is preferably a propylene-based multistage polymer made of the following constituents (A) and (B): (A) a constituent containing a propylene homopolymer component having a intrinsic viscosity [$\eta$] of more than 10 dL/g, which is measured in a tetralin solvent at 135°C or a copolymer component of propylene and $\alpha$-olefin having carbon number of 2 to 8, the component occupying 5 to 15 mass% of the total polymer; and
(B) a constituent containing a propylene homopolymer component having a intrinsic viscosity [$\eta$] of 0.5 to 3.0 dL/g, which is measured in a tetralin solvent at 135°C or a copolymer component of propylene and α-olefin having carbon number of 2 to 8, the component occupying 85 to 95 mass% of the total polymer.

The propylene-based multistage polymer is a linear propylene-based polymer having a higher melt tension due to the addition of the constituent (A) that is an ultrahigh-molecular-weight propylene based polymer. The multistage polymer also has an excellent viscoelastic property because the viscoelasticity is adjusted by controlling a molecular weight distribution

Therefore, by using the propylene-based multistage polymer having the excellent viscoelastic property as the constituent material, the extruded propylene-based resin foam can reliably has the expansion ratio of 10 or more, the average cell diameter of less than 400 μm (preferably 200 μm or less). In addition, according to the propylene-based multistage polymer, the percentage of closed cell in the extruded foam can be increased. For example, the closed cell content of 40 or more % can be surely attained.

In the extruded propylene-based resin foam according to the aspect of the present invention, a relationship between a melt flow rate (MFR) at 230°C and a melt tension(MT) at 230°C of the extruded propylene-based resin foam preferably satisfies the following expression (I):

Extruded propylene-based resin foam.

[Formula 1]

$$\log (MT) > -1.33 \log (MFR) + 1.2 \; .... \; (I)$$

According to the aspect of the present invention, the relationship between the melt flow rate (MFR) at 230°C and the melt tension (MT) at 230°C is represented by the above-mentioned expression (I). Therefore, molding of a foam-molding having the high expansion ratio can be realized, and the extruded foam can easily and reliably have the expansion ratio of 10 or more.

Further, in the extruded propylene-based resin foam according to the aspect of the present invention, the molding material preferably contains an olefin-based polymer having a loss tangent (tan δ) of 0.04 to 100 at a temperature of 298 K and a frequency of 10 Hz. The olefin-based polymer may be hereinafter referred to as a specific olefin-based polymer.

This specific olefin-based polymer does not combine with propylene-based resin: thus removable from the crystal of polypropylene which is a crystalline polymer. As a result, the specific olefin-based polymer, which is a viscous substance, is uniformly present on the surfaces of the foam cells in the extruded foam.

Specifically, while the propylene-based resin forming a rigid portion has an energy-transmitting property, a substance having a viscosity near a room temperature (the specific olefin-based polymer) changes a vibration energy to a thermal energy by an internal molecular movement. Thus, a property of absorbing a vibration energy is provided. It is desirable to uniformly disperse a viscous substance on a vibrating surface so that the vibration is absorbed. The specific olefin-based polymer having a molecular structure similar to the polypropylene-based resin (vibrating surface) has a certain degree of compatibility with the polypropylene-based resin. Thus, uniformly dispersed on the wall surface of the foam cell, the specific olefin-based polymer effectively absorbs vibrations, thereby realizing extruded foam having an excellent vibration-suppressive performance.

Further, in the extruded propylene-based resin foam according to the aspect of the present invention, a weight ratio (a/b) of the olefin-based polymer (a) to the propylene-based resin (b) is 1/100 to 80/100.

According to this aspect of the present invention, the extruded foam includes the specific olefin-based polymer such that the weight ratio (a/b) is in a range of 1/100 to 80/100. With this arrangement, the olefin-based polymer can be suitably dispersed on the wall surface of the foam cells in a molded foam product made of a polypropylene-based resin, thereby improving the vibration-suppressive performance of the product.

Further, in the extruded propylene-based resin foam of the aspect of the present invention, a 1-butene copolymer is preferably used as the olefin-based polymer, the 1-butene copolymer having either a first property or a second property as follows. The use of such a 1-butene copolymer reliably provides the extruded foam with a vibration-suppressive performance.

First Property: a 1-butene copolymer satisfying the following conditions (1), (2), and (3):

(1) an intrinsic viscosity [η] of the copolymer measured in a tetralin solvent at 135°C is 0.01 to 0.5 dL/g;
(2) the copolymer is a crystalline resin whose melting point ($T_m$-D) is 0 to 100°C, the melting point being defined as the top of peak observed at a highest temperature side of a melting-point endothermic curve by use of a differential scanning calorimeter (DSC), the melting-point endothermic curve being obtained by heating up at a rate of 10°C/min after keeping a sample at -10°C under nitrogen atmosphere for 5 minutes; and

(3) a stereoregularity index {(mmmm)/(mmrr + rmmr)} of the copolymer is 30 or less.

Second Property: a 1-butene copolymer satisfying the following (1), (2), and (3'):

(1') an intrinsic viscosity [η] of the copolymer measured in a tetralin solvent at 135°C is 0.25 to 0.5 dL/g; (2) the copolymer is a crystalline resin whose melting point ($T_m$-D) is 0 to 100°C, the melting point being defined as the top of peak observed at a highest temperature side of a melting-point endothermic curve by use of a differential scanning calorimeter (DSC), the melting-point endothermic curve being obtained by heating up at a rate of 10°C/min after keeping a sample at -10°C under nitrogen atmosphere for 5 minutes; and

(3') a mesopentad fraction (mmmm) of the copolymer obtained from a $^{13}$C-nuclear magnetic resonance (NMR) spectrum is 73 or less %.

A method of producing extruded propylene-based resin foam according to another aspect of the present invention is a method for producing any of the above-mentioned extruded propylene-based resin foam, the method comprising steps of: extruding a molding material from an extrusion die; and vacuum-suctioning propylene-based resin foam extruded from the extrusion die in a direction substantially perpendicular to the extruding direction.

In the production method according to this aspect of the present invention, after the molding material is extruded from the extrusion die, the extruded propylene-based resin foam is then vacuum-suctioned in the direction substantially perpendicular to the extruding direction, so that a fiber-length direction of fibrous filler (orientation of fibrous filler) can be arranged along the thickness direction of the extruded propylene-based resin foam. Therefore, the extruded propylene-based resin foam having a high energy-absorbing capability can be obtained.

BRIEF DESCRIPTION OF DRAWINGS

Fig. 1 is a cross sectional view illustrating an extruded propylene-based resin foam according to an embodiment of the present invention.
Fig. 2 is a diagram illustrating a stress-strain curve of an extruded propylene-based resin foam without fibrous filler.
Fig. 3 is a diagram illustrating a stress-strain curve of the extruded propylene-based resin foam according to the embodiment of the present invention.
Fig. 4 is a perspective view illustrating an extrusion die and a cooling sizing roller to be used in production of the extruded propylene-based resin foam.

EXPLANATION OF CODES

1　extruded propylene-based resin foam
2　extrusion die
3　cooling sizing roller
11　fibrous filler
12　foam cell
13　thread
21　extrusion orifice
31　cooling roller

BEST MODE FOR CARRYING OUT THE INVENTION

Embodiments of the present invention will be described below with reference to the drawings.

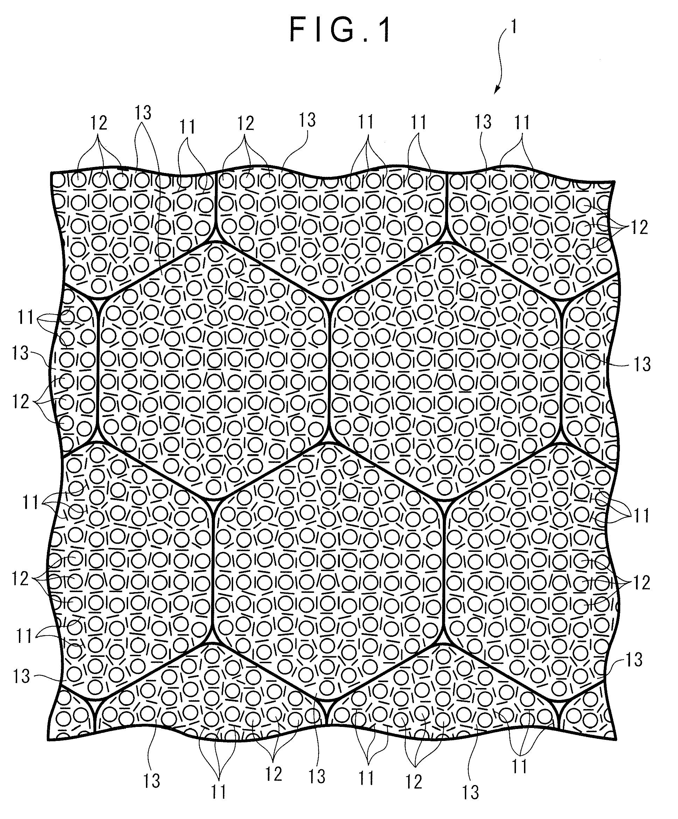

Fig. 1 shows extruded propylene-based resin foam 1 according to the present invention. The extruded propylene-based resin foam 1 (hereinafter, referred to as extruded foam 1) is provided by extrusion-foaming a molding material containing a propylene-based resin, and has the expansion ratio of 10 or more and the average cell diameter of less than 400 μm. In addition, the content of the fibrous filler 11 is 60 or less wt% with respect to the entire molding material.
With this arrangement, the extruded foam having the excellent insulation efficiency and excellent energy-absorbing capability can be provided.

In addition, when the extruded foam 1 has the closed cell content of 40 or more %, preferably 60 or more %, a large number of independent foam cell 12 substantially prevents heat from being transferred. Therefore, the extruded foam has the further advanced insulation efficiency, excellent mechanical strengths such as impact strength, and excellent moisture resistance.

As the propylene-based resin forming the extruded foam 1 of the present invention configured as described above, any propylene-based resin having high melt tension when melted can be used. For example, any of those described in JP 10-279632 A, JP 2000-309670 A, JP 2000-336198 A, JP 2002-12717 A, JP 2002-542360 A, and JP 2002-509575 A can be used.

Further, as described above, for obtaining the extruded foam 1 of the present invention, it is preferable, to increase the melt tension of the resin at the time of melting and to use as the polypropylene-based resin a resin material having excellent viscoelastic property.

As an example of the propylene-based resin having excellent viscoelastic property as described above, it is advantageous to use a propylene-based multistage polymer including constituents (A) and (B) as described below:

(A) a constituent containing a propylene homopolymer component having a intrinsic viscosity [η] of more than 10 dL/g, which is measured in a tetralin solvent at 135°C or a copolymer component of propylene and α-olefin having carbon number of 2 to 8, the component occupying 5 to 20 mass% of the total polymer; and
(B) a constituent containing a propylene homopolymer component having a intrinsic viscosity [η] of 0.5 to 3.0 dL/g, which is measured in a tetralin solvent at 135°C or a copolymer component of propylene and α-olefin having carbon number of 2 to 8, the component occupying 80 to 95 mass% of the total polymer.

The propylene-based multistage polymer is a linear propylene-based polymer having a higher melt tension due to the addition of the constituent (A) that is an ultrahigh-molecular-weight propylene based polymer. The multistage polymer also has a viscoelastic property adjusted by controlling a molecular weight distribution. The use of such a propylene-based multistage polymer having the excellent viscoelastic property is preferable because the extruded propylene-based resin foam meeting the requirements of the present invention as described above (i.e., the expansion ratio of 10 or more, the average cell diameter of less than 400 μm (preferably 200 μm or less) and the closed cell content of 60 or more %) can be reliably provided.

Now, the melt tension becomes insufficient when the component (A) has an intrinsic viscosity of 10 dL/g or less. Thus, the desired foaming performance may not be obtained.

In addition, when the mass fraction of the component (A) is less than 5 mass%, the melt tension becomes insufficient and the desired foaming performance may not be obtained. In contrast, when the mass fraction exceeds 20 mass%, a so-called melt fracture may intensify, which leads to a rough surface or the like of the extruded foam and resulting in a decrease in product quality.

The intrinsic viscosity of the component (A) is preferably more than 10 dL/g as described above, more preferably in the range of 12 to 20 dL/g, and particularly preferably in the range of 13 to 18 dL/g.

In addition, the mass fraction of the component (A) is preferably in the range of 8 to 18 mass%, and particularly preferably in the range of 10 to 16 mass%.

The melt tension becomes insufficient when the intrinsic viscosity of the component (B) is less than 0.5 dL/g and the desired foaming performance may not be obtained. In contrast, when it exceeds 3.0 dL/g, the viscosity becomes too high and a suitable extrusion molding process may not be performed.

Further, when the mass fraction of the component (B) is less than 80 mass%, a preferable extrusion molding process may not be easily performed. When the mass fraction exceeds 95 mass%, likewise, the melt tension becomes low and a preferable extrusion molding process may not be easily performed.

As descried above, the component (B) has an intrinsic viscosity preferably in the range of 0.5 to 3.0 dL/g, more preferably in the range of 0.8 to 2.0 dL/g, and particularly preferably in the range of 1.0 to 1.5 dL/g.

Further, the mass fraction of the component (B) is preferably in the range of 82 to 92 mass%, and particularly preferably in the range of 84 to 90 mass%.

In this propylene-based multistage polymer, α-olefin having carbon number of 2 to 8 as a constituent component of the copolymer component can be for example, α-olefins other than propylene, such as ethylene and 1-butene. Among them, it is preferable to use ethylene.

In addition, the propylene-based multistage polymer has the melt flow rate (MFR) at 230°C of preferably 100 g/10 min. or less, and particularly preferably 20 g/10 min. or less. When MFR exceeds 100 g/10 min., the melt tension and viscosity of the multistage polymer become low, the molding can be made difficult.

The propylene-based multistage polymer preferably has a relationship between the melt flow rate (MFR) at 230°C and the melt tension (MT) at 230°C represented by the following expression (I).

[Formula 2]

$$\log (MT) > -1.33 \log (MFR) + 1.2 \ .... \ (I)$$

Here, when the relationship between the melt flow rate (MFR) at 230°C and the melt tension (MT) at 230°C does not satisfy the above expression (I), it becomes difficult to perform the molding process of the foam with high expansion ratio. In such a case, the extruded foam having an expansion ratio of 10 or more may not be obtained. The constant (1.2) in the expression is preferably 1.3 or more, particularly preferably 1.4 or more.
Further, in order for the propylene-based multistage polymer to have the relationship represented by the expression (I), the polymer may include 5 mass% of the component (A).

In the propylene-based multistage polymer, it is preferable that as a dynamic viscoelasticity in a molten state (the relationship between angular frequency ω and storage-modulus G'), an inclination of storage modulus at a side of high frequencies is more than a predetermined level. Specifically, the ratio G'(10)/G'(1) of the storage modulus G'(10) at the angular frequency of 10 rad/s to the storage modulus G'(1) at the angular frequency of 1 rad/s is preferably 2.0 or more, and particularly preferably 2.5 or more. When the ratio G'(10)/G'(1) is smaller than 2.0, the stability of the extruded foam may decrease when an external deformation such as elongation is applied to the extruded foam.

Similarly, in the propylene-based multistage polymer, it is preferable that as a dynamic viscoelasticity in a molten state, an inclination of the storage modulus at a side of low frequencies is less than a predetermined level. Specifically, the ratio G'(0.1)/G'(0.01) of the storage modulus G'(0.1) at the angular frequency of 0.1 rad/s to the storage modulus G'(0.01) at the angular frequency of 0.01 rad/s is preferably 6.0 or less, and particularly preferably 4.0 or less. When the ratio G'(0.1)/G'(0.01) exceeds 6.0, the expansion ratio of the extruded foam may not be easily enhanced.

The propylene-based multistage polymer can be produced by polymerizing the propylene or copolymerizing propylene with α-olefin having carbon number of 2 to 8 in a polymerization procedure including two or more stages, using olefin-polymerization catalysts including the following components (a) and (b) or the following components (a), (b), and (c):

(a) A solid catalyst component produced by processing titanium trichloride produced by reducing titanium tetrachloride with an organic aluminum compound by an ether compound and an electron acceptor;
(b) An organic aluminum compound; and
(c) Cyclic ester compound.

In (a) the solid catalyst component produced by processing the titanium trichloride produced by reducing the titanium tetrachloride with the organic aluminum compound by the ether compound and the electron acceptor (hereinafter, also simply referred to as "(a) solid catalyst component"), as the organic aluminum compounds to be used for reducing titanium tetrachloride, there may be used, for example: (i) alkyl aluminum dihalide, specifically methyl aluminum dichloride, ethyl aluminum dichloride, and n-propyl aluminum dichloride; (ii) alkyl aluminum sesquihalide, specifically ethyl aluminum sesquichloride; (iii) dialkyl aluminum halide, specifically dimethyl aluminum chloride, diethyl aluminum chloride, di-n-propyl aluminum chloride, and diethyl aluminum bromide; (iv) trialkyl aluminum, specifically trimethyl aluminum, triethyl aluminum, and triisobutyl aluminum; and (v) dialkyl aluminum hydride, specifically diethyl aluminum hydride. Here, the term "alkyl" refers to lower alkyl such as methyl, ethyl, propyl, or butyl. In addition, the term "halide" refers to chloride or bromide. Particularly, the former is generally used.

The reduction reaction of the organic aluminum compound for obtaining the titanium trichloride is generally performed at temperatures ranging from -60 to 60°C, preferably -30 to 30°C. If the reduction reaction is performed at a temperature of less than - 60°C, the reduction reaction will require an extended period of time. In contrast, when the reduction reaction is performed at a temperature of more than 60°C, an excessive reduction may partially occur, which is unfavorable. The reduction reaction is preferably performed under the presence of an inactivated hydrocarbon solvent such as pentane, heptane, octane, and decane.

Further, it is preferable to perform an ether treatment and an electron acceptor treatment on the titanium trichloride obtained by the reduction reaction of the titanium tetrachloride with the organic aluminum compound.
Examples of ether compounds, which can be preferably used in the ether treatment of the titanium trichloride, include ether compounds in which each hydrocarbon residue is a chain hydrocarbon having carbon number of 2 to 8, such as diethyl ether, di-n-propyl ether, di-n-butyl ether, diisoamyl ether, dineopentyl ether, di-n-hexyl ether, di-n-octyl ether, di-2-ethyl hexyl ether, methyl-n-butyl ether, and ethyl-isobutyl ether. Among them, in particular, use of di-n-butyl ether is preferable.

Preferable examples of the electron acceptors that can be used in the treatment of titanium trichloride include halogenated compounds of elements in groups III to IV and VIII in the periodic table, specifically, titanium tetrachloride, silicon tetrachloride, boron trifluoride, boron trichloride, antimony pentachloride, gallium trichloride, ferric trichloride, tellurium dichloride, tin tetrachloride, phosphorus trichloride, phosphorus pentachloride, vanadium tetrachloride, and zirconium tetrachloride.

The treatment of titanium trichloride with the ether compound and the electron acceptor in preparation of solid catalyst component (a) may be performed using a mixture of both treatment agents, or may be performed using one of these treatment agents at first and then the other afterward. Note that among them, the latter is more preferable than the former: the treatment with the electron acceptor after the treatment with ether is more preferable.

Prior to the treatment with the ether compound and the electron acceptor, the titanium trichloride is preferably washed with hydrocarbon. The above-mentioned ether treatment with titanium trichloride is performed such that the titanium trichloride is brought into contact with the ether compound. The titanium trichloride treatment with the ether compound is advantageous when performed such that those two are brought into contact with each other in the presence of a diluent. Examples of the diluent preferably include inactivated hydrocarbon compounds such as hexane, heptane, octane, decane, benzene, and toluene. A treatment temperature in the ether treatment is preferably in the range of 0 to 100°C. In addition, although a time period for the treatment is not specifically limited, the treatment is generally performed in the range of 20 minutes to 5 hours.

An amount of the ether compound used may be generally 0.05 to 3.0 mol, preferably 0.5 to 1.5 mol per mol of the titanium trichloride. It is not preferable that the amount of the ether compound used is less than 0.05 mol because a sufficient increase in stereo regularity of a polymer to be produced is impaired. On the other hand, it is unfavorable that the amount of the ether compound used exceeds 3.0 mol because yield can be decreased even though stereo regularity of a polymer to be generated increases. Note that the titanium trichloride treated with the organic aluminum compound or the ether compound is a composition mainly containing titanium trichloride.

Further, as the solid catalyst component (a), Solvay-type titanium trichloride may be preferably used.

As the organic aluminum compound (b), the same organic aluminum compound as described above may be used.

Examples of the cyclic ester compound (c) include $\gamma$-lactone, $\delta$-lactone, and $\epsilon$-lactone. Among them, $\epsilon$-lactone is preferably used.

Further, the catalyst for olefin polymerization used in the production of the propylene-based multistage polymer can be obtained by mixing the components (a) to (c) as described above.

For obtaining the propylene-based multistage polymer, among two- stage polymerization methods, it is preferable to polymerize propylene or copolymerize propylene and $\alpha$-olefin having carbon number of 2 to 8 in the absence of hydrogen. Here, the term "in the absence of hydrogen" means "substantially in the absence of hydrogen", so that it includes not only the complete absence of hydrogen but also the presence of a minute amount of hydrogen (for example, about 10 molppm). In short, the term "in the absence of hydrogen" includes a case of containing hydrogen in an amount small enough to prevent the intrinsic viscosity [$\eta$] of the propylene-based polymer or of the propylene-based copolymer at the first stage, which is measured in a tetralin solvent at 135°C, from becoming 10 dL/g or less.

In the absence of hydrogen as described above, the polymerization of propylene or the copolymerization of propylene with $\alpha$-olefin may result in the production of component (A) of the propylene-based multistage polymer as a ultrahigh-molecular-weight propylene-based polymer. The component (A) may be preferably produced by slurry polymerization of a raw material monomer in the absence of hydrogen at a polymerization temperature of preferably 20 to 80°C, more preferably 40 to 70°C, with a polymerization pressure of generally ordinary pressure to 1.47 MPa, preferably 0.39 to 1.18 MPa.

In addition, in this production method, the component (B) of the propylene-based multistage polymer may be preferably produced at the second stage or later. There is no specific limitation for the production conditions of the component (B) except for a limitation that the olefin-based polymer catalyst as described above should be used. However, the component (B) may be preferably produced by polymerizing a raw material monomer in the presence of hydrogen serving as a molecular weight modifier at a polymerization temperature of preferably 20 to 80°C, more preferably 60 to 70°C with a polymerization pressure of generally ordinary pressure to 1.47 MPa, preferably 0.19 to 1.18 MPa.

In the production method as described above, a preliminary polymerization may be carried out before performing the present polymerization. A powder morphology can be favorably maintained by performing the preliminary polymerization. The preliminary polymerization is generally performed such that propylene in amount of preferably 0.001 to 100 g, more preferably 0.1 to 10 g per gram of solid catalyst component is polymerized or copolymerized with $\alpha$-olefin having carbon number of 2 to 8 at a polymerization temperature of preferably 0 to 80°C, more preferably 10 to 60°C.

Further, the propylene-based resin contained in the molding material of the extruded foam 1 may be a propylene-based resin composition, and a mixture may be formed by mixing the propylene-based multistage polymer as described above with the propylene-based polymer having the melt flow rate (MFR) at 230°C of 30 g/10 min. or less, and the ratio $M_w/M_n$ of weight average molecular weight ($M_w$) and a number average molecular weight ($M_n$) of 5.0 or less.

The above-mentioned propylene-based multistage polymer may be blended with other materials to provide a resin composition, thereby improving the moldability and high-functionality of the extruded foam, lowering the cost thereof, and the like.

The use of the resin composition allows the extruded foam 1 to have the high melt tension and the excellent viscoelastic property, so that the extruded foam 1 can be provided with the high expansion ratio, good surface appearance, and an effect of preventing drawing fracture at the time of sheet formation.

In the resin composition a weight ratio of the propylene-based polymer to the propylene-based multistage polymer is 6 to 1 or more, preferably 10 to 1 or more. If the weight ratio is smaller than 8 to 1, the surface appearance of the extruded foam 1 may become poor.

The melt flow rate (MFR) of the propylene-based polymer is preferably 30 g/10 min. or less, more preferably 15 g/10 min. or less, particularly preferably 10 g/10 min. or less. When the MFR exceeds 30 g/10 min., a defective molding of the extruded foam 1 may occur.

The $M_w/M_n$ of the propylene-based polymer is preferably 5.0 or less, particularly preferably 4.5 or less. If the $M_w/M_n$ exceeds 5.0, the surface appearance of the extruded foam 1 may be deteriorated.
Note that the propylene-based polymer can be produced by any polymerization method using a known catalyst such as a Ziegler-Natta catalyst or a metallocene catalyst.

As the dynamic viscoelasticity in a molten state (the relationship between the angular frequency $\omega$ and the storage-modulus G'), the resin composition preferably has a predetermined level or more of the inclination of storage modulus at high frequencies. In addition, the inclination of the storage modulus at low frequencies is preferably a certain level or less.
Specifically, the ratio G'(10)/G'(1) of the storage modulus G'(10) at the angular frequency of 10 rad/s to the storage modulus G'(1) at the angular frequency of 1 rad/s is preferably 5.0 or more, more preferably 5.5 or more. When the ratio G'(10)/G'(1) is smaller than 5.0, the stability of the extruded foam may decrease when an external deformation such as elongation is applied to the extruded foam 1.

In addition, the ratio G'(0.1)/G'(0.01) of the storage modulus G'(0.1) at the angular frequency of 0.1 rad/s to the storage modulus G'(0.01) at the angular frequency of 0.01 rad/s is preferably 14.0 or less, particularly preferably 12.0 or less. When the ratio G'(0.1)/G'(0.01) exceeds 14.0, the expansion ratio of the extruded foam 1 may not be easily increased.

Here, when the extruded foam 1 is drawn, it is common that components within a relaxation time of 1 to 10 sec leads to a decrease in drawing property of the extruded foam 1. Thus, the larger a contribution of the relaxation time of this region is, the smaller the inclination of the storage modulus G'(1) becomes at the angular frequency $\omega$ of about 1 rad/s. Thus, as an index of the inclination, the ratio G'(10)/G'(1) of the storage modulus G'(10) at the angular frequency $\omega$ of 10 rad/s is provided. From the results of a numerical simulation and an experimental analysis, it is found that the smaller the value is, the more breakable foam at the time of drawing of the extruded foam is. Therefore, the resin composition preferably has the G'(10)/G'(1) of 5.0 or more.

For foam breaking at the final stage of the growth of the foam cell or foam breaking accompanying high-speed elongation deformation near the die lips in the extrusion foam-molding process, a certain degree of strain-hardness property is required. Therefore, there is a need of an appropriate amount of the high molecular weight component at an appropriate relaxation time field. For that purpose, the storage modulus G' at the low-frequency region needs to be large to some extent. Therefore, as the index, the ratio G'(0.1)/G'(0.01) of the storage modulus G'(0.1) at the angular frequency $\omega$ of 0.1 rad/s to the storage modulus G'(0.01) at the angular frequency of 0.01 rad/s is provided. From the results of a numerical simulation and an experimental analysis, it is found that the larger the value is, the less the expansion ratio becomes due to foam breaking. Therefore, the above-mentioned resin composition preferably has the G'(0.1)/G'(0.01) of 14.0 or less.

Further, as long as the effect of the present invention is not prevented, where required, the propylene-based resin including the resin composition and constituting the extruded foam 1 of the present invention may be added with any of stabilizers such as an antioxidant, a neutralizer, a crystal-nucleus agent, a metal deactivator, a phosphorus processing stabilizer, a UV absorbent, an UV stabilizer, an optical whitening agent, a metallic soap, and an antacid absorbent; and additives such as a cross-linking agent, a chain transfer agent, a nucleating additive, a lubricant, a plasticizer, a filler, an intensifying agent, a pigment, a dye, a flame retardant, and an antistatic agent. The amounts of those additives may be suitably determined depending on the characteristic features and molding conditions, required in the extruded foam 1 o be molded.

When the propylene-based multistage polymer having the excellent melting viscoelasticity as described above is used as the propylene-based resin, the above-described additives can be added to the polymer to be melt-kneaded together into a shape of pallet by a conventionally-known melt-kneading machine in advance, and thereafter, the desired extruded foam 1 may be molded..

The content of fibrous filler 11 in the molding material of the extruded foam 1 is preferably 60 or less wt%, more preferably 5 to 30 wt% of the entire molding material. When the content is less than 5 wt%, it may be difficult to improve the energy-absorbing capability. On the other hand, when the content exceeds 30 wt%, the foam moldability may be degraded. In addition, when the content exceeds 30 wt%, the fibrous filler protrudes from the wall surface of the foam cell, so that the closed cell content may decrease and, the insulation efficiency and the foam moldability may be subsequently degraded. When the content exceeds 60 wt%, the foam moldability and the insulation efficiency is degraded. As the fibrous filler 11, for example, carbon fibers, glass fibers, and other inorganic fibers (e.g., silicon carbon fibers and alumina fibers) can be used. Among them, glass fibers are preferable. In addition, the carbon fibers include cellulose-based, PAN-based, and pitch-based.

Here, the fibrous filler 11 may be of a whisker shape, which is usually called a fiber shape, an exemplary fibrous filler may have an average fiber length of 3 mm and an average fiber diameter of 13 $\mu$m.

Note that when the glass fiber is used as the fibrous filler 11, it is preferable to use the glass fiber having an average fiber diameter in a range of 5 $\mu$m to 20 $\mu$m and an average fiber length in a range of 0.1 mm to 10 mm.

20 or more % of the total fibers contained in the fibrous fillers 11 is arranged in the thickness direction of the extruded foam 1. Here, the fibrous filler 11 arranged in the thickness direction means that an angle at which the fiber length direction is arranged to the axis of the thickness direction is 0 (in parallel to the thickness direction) to 45 degrees.

The fibrous filler 11 is arranged at random due to the foam cell 12. Specifically, the fibrous filler 11 is arranged so that the direction of fiber length may be along the extruding direction of the extruded foam 1. Besides, due to the presence of the foaming foam cell 12, the fibrous filler 11 is arranged in the thickness direction. With this arrangement, a high stress arises even when a slight strain is applied to the thickness direction of the extruded foam 1, thereby enhancing the energy-absorbing capability.

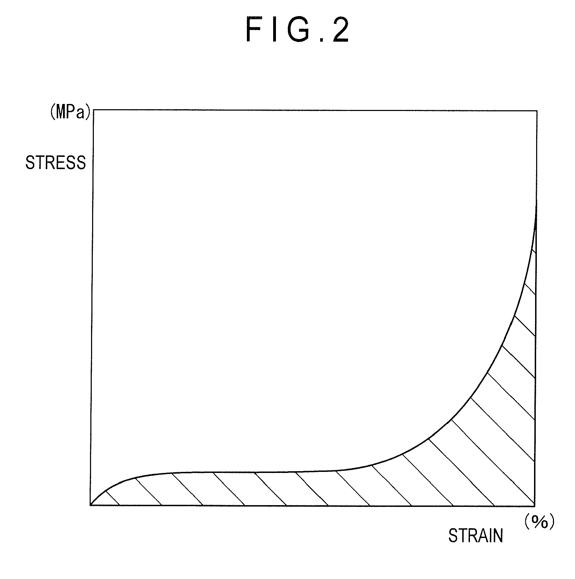

For more detailed explanation, Fig. 2 shows the stress-strain relationship of the extruded propylene-based resin foam containing no fibrous filler. In Fig. 2, the shaded portion indicates the amount of energy absorption. The larger the area of the shaded portion is, the higher the energy-absorbing capability is.

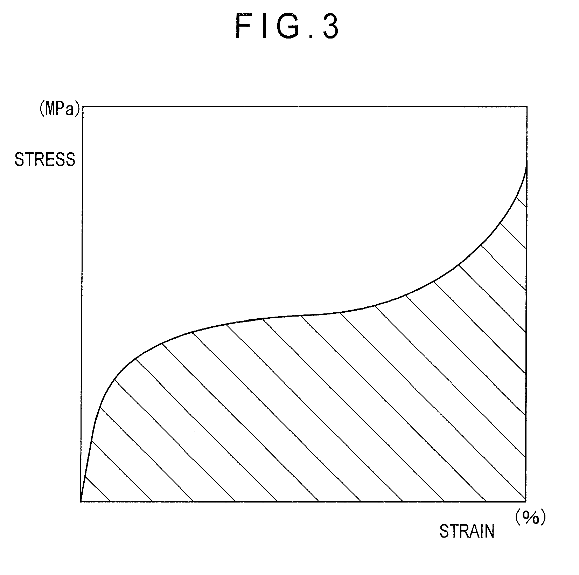

On the other hand, the fibrous filler 11 is contained in the extruded foam 1 according to this embodiment, and the fibrous filler 11 is arranged not only in the direction of extrusion but also in the thickness direction of the extruded foam 1. Therefore, the stress-strain relationship matches the diagram of Fig. 3. In other words, a small strain generates a large stress and the area of the shaded portion of Fig. 3 becomes larger than that of the shaded portion of Fig. 2. Therefore, the energy-absorbing capability is proven to be improved. In particular, in the extruded foam 1 according to this embodiment, 20 or more % of the fibrous filler 11 is arranged in the thickness direction of the extruded foam 1, thereby enhancing the energy-absorbing capability.

The extruded foam 1 of the present invention can be obtained by extrusion-foaming the above-mentioned propylene-based resin. A known extrusion foam-molding device can be used as a production device, in which a molding material is heated to be melted and then kneaded with a suitable shearing stress applied thereto for extrusion-foaming. An extruder included in the production device may be either a uniaxial extruder or a biaxial extruder. As an extrusion foam-molding device, for example, an extrusion foam-molding of a tandem-type disclosed in JP 2004-237729 A may be used, to which two extruders are connected.

In addition, as method to foam the propylene-based resin, physical foaming and chemical foaming may be adopted. In the physical foaming, a fluid (gas) is injected into the molten molding material at the time of molding, while in the chemical foaming, a foaming agent is added to and mixed with the molding material.

In the physical foaming, the fluid to be injected may be inert gas such as carbon dioxide (carbonic acid gas) and nitrogen gas. In the chemical foaming, the foaming agent such as azodicarbonamide and azobisisobutyronitrile may be used.

In the above-mentioned physical foaming, it is preferable that carbonic acid gas or nitrogen gas in a supercritical state be injected into the molten molding material because a large number of fine foam cells having the average cell diameter of less than 400 $\mu$m, preferably 200 $\mu$m or less can be reliably foamed.

Here, the term "supercritical state" refers to a state where the density of a gas and a liquid becomes equal so that the gas and liquid cannot distinguishably exist, due to exceeding of the limiting temperature and the limiting pressure at which both the gas and the liquid can coexist. The fluid produced in this supercritical state is called a supercritical fluid.

In addition, the temperature and the pressure in a supercritical state are respectively called a supercritical temperature and a supercritical pressure. For example, for carbonic acid gas the supercritical temperature is 31°C while the supercritical pressure is 7.4 MPa. Further, carbonic acid gas or nitrogen gas in the supercritical state may be injected in an amount of about 4 to 15 mass% with respect to the molding material. It can be injected into the molten molding material in a cylinder.

The shape of the extruded foam 1 may be any known shape of structural materials including a plate, a cylinder, a rectangle, a convex, and a concave shape, but not specifically limited thereto.

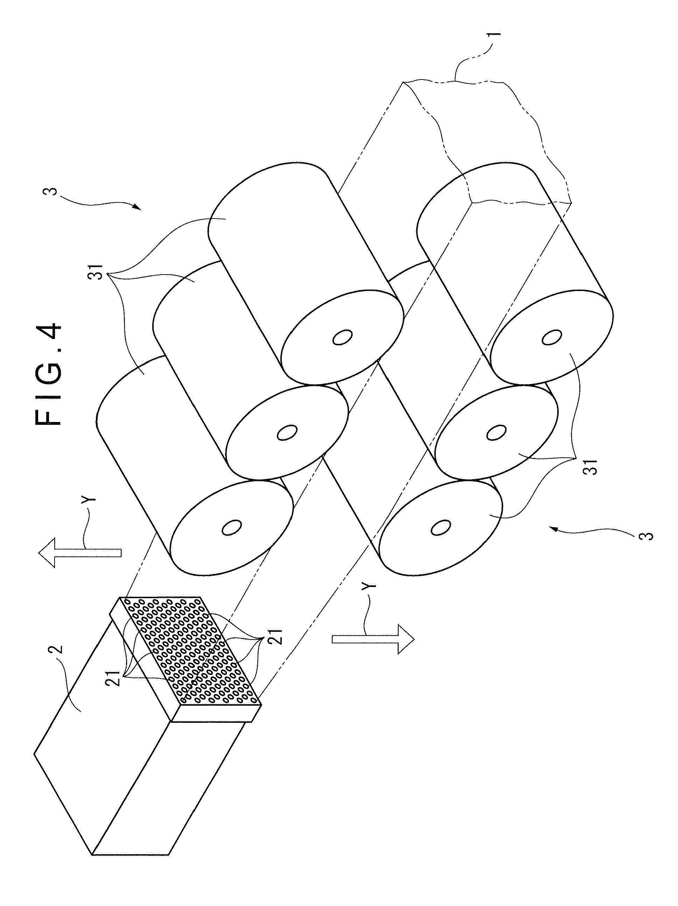

Further, the extruded foam 1 may be formed as an assembly of bundled threads of extruded foam. The assembly is formed such that as shown in Fig. 4, a plurality of threads 13 (see Fig. 1) are extrusion-foamed from the extrusion die 2 in which a plurality of extrusion orifices 21 are formed to be fused and bundled together in the longitudinal direction. By bundling the plurality of threads 13 of the extruded foam to be the assembly of the bundled threads of the extruded foam, the expansion ratio of the extruded foam can be increased. Thus, the extruded form 1 having a high expansion ratio and a sufficient thickness can be easily molded into various shapes.

The shape of the thread 13 which constitutes the assembly of the bundled threads of the extruded foam depends on the shape of the extrusion orifice 21 formed in the extrusion die 2. The extrusion orifice 21 may have a desirable shape. Examples thereof include a circle, a rhombus, and a slit. In molding, the pressure loss at the outlet portion of the extrusion die 2 is preferably 3 MPa to 50 MPa.

In addition, all the extrusion orifices 21 formed in the extrusion die 2 may be of the same shape, or each of the extrusion orifices 21 may have a different shape such that orifices of various shapes can be formed in one extrusion die 2.

Further, for example, even when the extrusion orifices 21 are formed in a shape of circle, all the orifices do not need to have the same circle diameter, and the plurality of orifices 21 each may have a different diameter.

The extruded foam 1 extruded from the extrusion die 2 is vacuum-suctioned in the thickness direction (the direction of the arrows Y) as shown in Fig. 4 and then sandwiched and compressed by a pair of cooling sizing rollers 3for cooling.

The extruded foam 1 is vacuum-suctioned by vacuum-suctioning devices that are oppositely placed with the extruded foam 1 interposed therebetween.

Each of the cooling sizing rollers 3 has a plurality of, for example, three cooling rollers 31, and the pair of the cooling rollers 3 are oppositely placed with the extruded foam 1 interposed therebetween.

Each of the cooling rollers 31 is provided with a temperature control unit (not shown) that is adapted to control the temperature of the surface by a method of, for example, water-cooling.

The extruded propylene-based resin foam 1 of the present invention thus obtained has the expansion ratio of 10 or more and the average cell diameter of less than 400 $\mu$m, so that the foam cells wall can be formed in plurality in the extruded foam. Therefore, a radiation heat from the outside can be effectively blocked and the extruded foam 1 having the excellent insulation efficiency can be provided.

Further, the average cell diameter of the extruded propylene-based resin foam 1 is preferably 200 $\mu$m or less. When the average cell diameter is further smaller to be 200 $\mu$m or less, more foam cell walls can be formed in the extruded foam 1. Therefore, the extruded propylene-based foam having an improved insulation efficiency is provided.

The propylene-based resin contained in the molding material of the extruded propylene-based resin foam of the present invention is also excellent in recycling performance. In addition, it has good chemical resistance and heat-resistance. Accordingly, the extruded propylene-based resin foam 1 of the present invention is to be provided with those properties (i.e., recycling performance, chemical resistance, and heat-resistance). Further, the use of the propylene-based resin, which is a low-cost material, can realize the provision of the extruded foam 1 having the above-mentioned effects at a low cost.

Further, the extruded propylene-based resin foam 1 of the present invention contains a 60 or less wt% fibrous filler 11. The fibrous filler 11 is arranged such that the fiber-length direction thereof is not only along the extruding direction of the foam 1 but also along the thickness direction due to the presence of forming foam cells 12. Therefore, even when a slight strain is applied in the thickness direction of the extruded propylene-based resin foam 1, a high stress arises, thereby improving the energy-absorbing capability.

The extruded foam of the present invention is excellent in insulation efficiency and energy-absorbing capability as described above, so the extruded foam can be used for a structural material (a component of a ceiling, a door, a floor, a cowl, or the like) in the field of automobiles, and a structural material (for example, a building material) in the fields of building construction and civil engineering.

Further, since the extruded foam 1 of the present invention has the average cell diameter as small as less than 400 $\mu$m (preferably 200 $\mu$m or less), the extruded foam can be provided with an excellent insulation efficiency. When compared with a conventional extruded foam that has the same level of the insulation efficiency, the extruded foam is also advantageous because it can be formed thinner than the conventional foam while maintaining the level of the insulation efficiency. Therefore, for example, when the present invention is applied to the fields as described above, the extruded foam of the present invention can favorably provide an additional advantage that with the use of the present invention, the larger living space can be obtained than with the use of the conventional thermal insulation material.

It should be noted that the molding material of the present invention may be added with an olefin-based polymer (specific olefin-based polymer) having a loss tangent (tan $\delta$) of 0.04 to 100 at a temperature of 298 K and a frequency of 10 Hz additionally to the additives described above. This specific olefin-based polymer does not combine with the propylene-based resin: thus removable from the crystal of polypropylene, which is a crystalline polymer. As a result, the specific olefin-based polymer, which is a viscous substance, is uniformly present on the surface of the foam cell in the extruded foam, thereby enhancing the vibration-suppressive performance of the extruded foam.

In addition, the specific olefin-based polymer has the loss tangent (tan $\delta$) of 0.04 to 100 at a temperature of 298 K and a frequency of 10 Hz, and it is particularly preferable that the polymer has the loss tangent of 0.04 to 10. Since the specific olefin-based polymer having the loss tangent (tan $\delta$) of 0.04 to 100 shows viscous behavior, the extruded foam formed of a propylene-based resin containing the specific olefin-based polymer can have an excellent vibration-suppressive performance. On the other hand, when the loss tangent is smaller than 0.04, a sufficient vibration-suppressive performance cannot be obtained. When the loss tangent is larger than 100, because the foam shows the solid performance, the energy is not absorbed into inside, so that the extruded foam is vibrated together with the rigid propylene-based resin. Therefore, in neither case, the vibration-suppressive performance is obtained.

Note that such a loss tangent may be measured by, for example, a commercially-available solid viscoelasticity measuring apparatus (for example, DMS6100: manufactured by Seiko Instruments Inc.).

The olefin-based polymer whose representative example is 1-butene copolymer is preferably added to the polypropylene-based resin so that the weight ratio satisfies the following condition: olefin-based polymer (a)/propylene-based resin (b) = 1/100 to 80/100, and it is particularly preferable that the weight ratio is 5/100 to 60/100. When the polypropylene-based resin contains the olefin-based polymer at a weight ratio of 1/100 to 80/100, the olefin-based polymer is appropriately dispersed on the wall surface of the foam cells in the molded foam product made of the polypropylene-based resin, thereby enhancing the vibration-suppressive performance.

The olefin-based polymer may be prepared from any one of resin materials disclosed in, for example, WO 03/070788, WO 03/070790, and JP 3255697 B. Specifically, high-fluidic 1-butene copolymer or 1-butane polymer analogous thereto as disclosed in WO 03/070788 may be used.

A 1-butene copolymer can be used specifically when the copolymer has either a first property or a second property as shown below. The use of the copolymer reliably provides the extruded foam with a vibration-suppressive performance.

First of all, as the first property, the copolymer is required to satisfy the following conditions (1) to (3):

(1) an intrinsic viscosity [$\eta$] of the copolymer measured in a tetralin solvent at 135°C is 0.01 to 0.5 dL/g;

(2) the copolymer is a crystalline resin whose a melting point ($T_m$-D) is 0 to 100°C, the melting point being defined as the top of peak observed by use of a differential scanning calorimeter (DSC) at a highest temperature side of a melting-point endothermic curve which is obtained by heating up at a rate of 10°C/min after keeping a sample at -10°C under nitrogen atmosphere for 5 minutes; and

(3) a stereoregularity index {(mmmm)/(mmrr + rmmr)} of the copolymer is 30 or less.

In addition, as the second property, the 1-buten polymer is required to satisfy the following conditions (1'), (2), and (3'):

(1') an intrinsic viscosity [$\eta$] of the copolymer measured in a tetralin solvent at 135°C is 0.25 to 0.5 dL/g;

(2) the copolymer is a crystalline resin whose melting point ($T_m$-D) is 0 to 100°C, the melting point being defined as the top of peak observed by use of a differential scanning calorimeter (DSC) at a highest temperature side of a melting-point endothermic curve which is obtained by heating up at a rate of 10°C/min after keeping a sample at -10°C under nitrogen atmosphere for 5 minutes; and

(3') a mesopentad fraction (mmmm) of the copolymer obtained from a $^{13}$C-nuclear magnetic resonance (NMR) spectrum is 73 or less %.

Among them, in the 1-butene polymer having the first property, the intrinsic viscosity [$\eta$] measured in the tetralin solvent at 135°C is 0.01 to 0.5 dL/g. The intrinsic viscosity [$\eta$] is preferably 0.1 to 0.5 dL. When the intrinsic viscosity [$\eta$] is smaller than 0.01 dL/g, the solid property (strength) may be degraded. In contrast, when it exceeds 0.5 dL, the fluidity may be impaired.

In addition, in the 1-butene polymer having the second aspect, the intrinsic viscosity [$\eta$] measured in the tetralin solvent at 135°C is 0.25 to 0.5 dL/g. The intrinsic viscosity [$\eta$] is preferably 0.3 to 0.5 dL/g.

The intrinsic viscosity [$\eta$] of smaller than 0.25 dL/g may cause a shortage of the molecules binding between the crystals, and the toughness (tensile elongation at break) can be impaired. The intrinsic viscosity of exceeding 0.5 dL/g can induce an unnecessary increase of the viscosity and the fluidity can be damaged, resulting in poor molding.

The 1-butene copolymers having either the first or second properties is required in term of elastic property to be a crystalline resin whose melting point ($T_m$-D) is 0 to 100°C when measured with a differential scanning calorimeter (DSC), and the melting point is preferably 0 to 80°C.

The melting point ($T_m$-D) may be measured with differential scanning calorimetry (abbreviated as DSC). Specifically, the melting point ($T_m$-D) to be measured is defied as the top of the peak observed at the highest temperature of the melting-point endothermic curve by use of a differential scanning calorimeter (DSC-7, manufactured by PerkinElmer, Inc.). The melting-point endothermic curve is obtained by keeping 10 mg of sample at -10°C under nitrogen atmosphere for 5 minutes and then heating up the sample at a rate of 10°C/min Here, the term "crystalline resin" used herein indicates a resin in which the $T_m$-D is observed.

In addition, in the 1-butene copolymer having the first property, the stereoregularity index {(mmmm)/(mmrr + rmmr)} is 30 or less, preferably 20 or less, and more preferably 15 or less. When the stereoregularity index exceeds 30, the flexibility of the viscous substance may be degraded and the vibration-absorbing capability is impaired.

Here, a mesopentad fraction (mmmm) is preferably 90 or less %, more preferably 85 or less %, particularly preferably 80 or less %. When the mesopentad fraction (mmmm) exceeds 90%, the flexibility or secondary moldability may be degraded.

In the 1-butene copolymer having the second aspect, the mesopentad ratio is 73 or less %. When the mesopentad fraction (mmmm) exceeds 73%, physical crosslink points is exceedingly increased and the flexibility may be degraded.

Further, the mesopentad ratio (mmmm) of the 1-butene copolymer was obtained referring to methods described in Asakura et al., "Polymer Journal, 16, 717 (1984)", J. Randall et al., "Macromol. Chem. Phys., C29, 201 (1989)", and V. Busico et al., "Marcomol. Chem. Phys., 198, 1257 (1997)". In short, a $^{13}$C-nuclear magnetic resonance spectrum is used to measure signals of methylene and methine group to obtain a mesopentad fraction in a poly (1-butene) molecule.

Note that, the measurement of the $^{13}$C-nuclear magnetic resonance spectrum may be carried out by using the following device and under the following conditions.

Device: JNM-EX-400 type 13C-NMR device manufactured by JEOL Ltd.

Method: Proton-complete-decoupling method

Concentration: 230 mg/ml

Solvent: a mixture solvent of 1,2,4-trichlorobenzene and heavy benzene (90 : 10) (volume ratio)

Temperature: 130°C

Pulse width: 45°

Pulse repetition time: 4 sec.

Operation: 10,000 times

Further, the steoregularity index {(mmmm)/(mmrr + rmmr)} of the 1-butene polymer may be calculated from a value obtained by measuring (mmmm), (mmrr), and (rmmr) by the above-mentioned methods.

In addition, in the 1-butene polymers having either the first or second properties, weight average molecular weights ($M_w$) is preferably 10,000 to 100,000 when measured using the GPC method in addition to the above-mentioned requirements. If $M_w$ is less than 10,000, the physical property (strength) may be degraded. In contrast, if $M_w$ exceeds 100,000, the fluidity may be impaired, resulting in poor workability.

Note that, the above-mentioned $M_w/M_n$ is a value calculated from the values equivalent to the mass average molecular weight ($M_w$) and the number average molecular weight ($M_n$) of polystyrene. The mass average molecular weight ($M_w$) and the number average molecular weight ($M_n$) is measured in accordance with the GPC method by using the following device under the following conditions.

(GPC measurement device)

Column: TOSO GMHHR-H(S) HT

Detector: RI detector for liquid chromatography; WATERS 1500C Measurement conditions

(50C Measurement condition)

Solvent: 1,2,4-trichlorobenzene

Measurement temperature: 145°C

Flow rate: 1.0 ml/min.

Sample concentration: 2.2 mg/ml

Injection amount: 160 μl

Analytic carve: Universal Calibration

Analytic program: HT-GPC (Ver. 1.0)

In the 1-butene polymer having the first property, the elongation modulus measured in a tension test based on JIS K7113 is preferably 500 or less MPa, and more preferably 300 or less MPa. If the elongation modulus exceeds 500 MPa, a sufficient elasticity may not be obtained.

When the 1-butene polymer is a copolymer, it is preferable that the copolymer is a random copolymer. In addition, a structural unit obtained from 1-butene is preferably 50 or more mol%, and more preferably 70 or more mol%. If the structural unit derived from 1-butene is 50 or less mol%, the secondary moldability may be impaired.

Further, if the 1-butane polymer is a copolymer, a randomness index R obtained by the following expression (V) from an α-olefin chain may be preferably 1 or less.

[Formula 3]

$$R = 4 \, [\alpha\alpha] \, [BB]/[\alpha B]^2 \quad ..........(V)$$

(wherein [αα] represents an α-olefin chain rate, [BB] represents a butene chain rate, and [αB] represents an α-olefin-butene chain rate.)

Here, R is an index representing randomness, and the smaller the value of R is, the more α-olefin (comonomer) is isolated and the composition becomes uniform. The value of R is preferably 0.5 or less, and more preferably 0.2 or less. Further, if R is 0, the αα chain disappears and there only remains a completely isolated chain in the α-olefin chain.

Note that R and the content of butene when the 1-butene polymer is a propylene/butene copolymer may be measured as follows.

Specifically, the content of butene and R may be calculated by the following method such that the JNM-EX400 type NMR device manufactured by JEOL Ltd. is used to measure a $^{13}$C-NMR spectrum under the following conditions.

(Measurement conditions)

Sample concentration: 220 mg/NMR solution 3 ml
NMR solution: 1,2,4-trichlorobenzene/benzene-d6 (90/10 vol%)
Measurement temperature: 130°C
Pulse width: 45°
Pulse repetition time: 10 sec.
Accumulated times: 4,000 times

Under the above-mentioned measurement conditions, PP, PB, and BB diad chain fractions in the copolymer molecular chain are obtained by measuring a Sαα carbon signal of $^{13}$C-nuclear magnetic resonance spectrum in accordance with a method described in J. C. Randall, Macromolecules, 1978, 11, 592.

From the respective diad chain fractions (mol%) thus obtained, the butene content and the randomness index R are obtained from the following expressions (W) and (X).

[Formula 4]

$$\text{Butene content (mol\%)} = [BB] + [PB]/2 \ ... \ (W)$$

[Formula 5]

$$\text{Random index } R = 4 \ [PP][BB]/[PB] \ 2 \ ...(X)$$

(in the expressions (W) and (X), [PP] represents a propylene chain fraction, [BB] represents a butene chain fraction, and [PB] represents a propylene-butene chain fraction).

In addition, the butene content and R may be measured as follows when the 1-butene polymer is an octene-butene copolymer. Specifically, the butene content and R may be calculated by the following method such that the JNM-EX400 type NMR device manufactured by JEOL Ltd. is used to measure a $^{13}$C-NMR spectrum under the following conditions.

(Measurement conditions)

Sample concentration: 220 mg/NMR solution 3 ml
NMR solution: 1,2,4-trichlorobenzene/benzene-d6 (90/10 vol%)
Measurement temperature; 130°C
Pulse width: 45°
Pulse repetition time: 10 sec.
Accumulated times: 4,000 times

Under the above-mentioned measurement conditions, a Sαα carbon signal of $^{13}$C-nuclear magnetic resonance spectrum is measured and then OO, OB, and BB diad chain fractions in the copolymer molecular chain are respectively obtained from the peak strengths derived from the BB chain observed in 40.8 to 40.0 ppm, the OB chain observed in 41.3 to 40.8 ppm, and the OO chain observed in 42.5 to 41.3 ppm.

From the respective diad chain fractions (mol%) thus obtained, the butene content and the random index R are obtained from the following expressions (Y) and (Z).

[Formula 6]

$$\text{Butene content (mol\%)} = [BB] + [OB]/2 \; ... \; (Y)$$

[Formula 7]

$$\text{Random index R} = 4 \, [OO][BB]/[OB]^2 \; ...(Z)$$

(in the expressions (Y) and (Z), [OO] represents an octene chain fraction, [BB] represents a butene chain fraction, and [OB] represents an octene-butene chain fraction).

The 1-butene copolymers as described above can be easily obtained in accordance with manufacturing methods of 1-butene copolymer disclosed in WO 03/070788.

Note that the embodiment as described above merely represents an example of embodiments of the present invention and the present invention is not limited to the above embodiment. As a matter of course, the modification and improvement to the configuration without departing from the objects and advantages of the present invention shall be included in the scope of the present invention. The specific structure, shape, and the like in embodying the present invention may be any other structure, shape, and the like as long as it does not depart from the objects and advantages of the present invention.

Examples

The present invention will be described below in more detail with reference to examples and production examples. However, the present invention is not limited to the contents of the examples or the like.

Note that numerical values of solid properties and the like in the examples and the production examples described below were measured by the methods described below.

(1) Mass fractions of a propylene-based polymer component (Component 1) at the first stage and a propylene-based polymer component (Component 2) at the second stage:

The mass fractions were obtained from the mass balance using the flow meter integrated value of propylene continuously supplied at the time of polymerization.

(2) Intrinsic viscosity [η]:

The intrinsic viscosity [η] was measured in a tetralin solvent at 135°C. Further, the intrinsic viscosity [$\eta_2$] of Component 2 was calculated by the following expression (II):

[Formula 8]

$$[\eta_2] = ([\eta_{total}] \times 100 - [\eta_1] \times W_1)/W_2 \; .........(II)$$

(3) Melt flow rate (MFR):

MFR was measured based on JIS K7210 at a temperature of 230°C and a weight of 2.16 kgf.

(4) Melt tension (MT):

Capirograph 1C (manufactured by Toyo Seiki Seisaku-sho. Ltd.) was used and measured at a measurement temperature of 230°C, an extrusion rate of 10 mm/min, a drawing temperature of 3.1 m/min. For the measurement, an orifice having a length of 8 mm and a diameter of 2.095 mm was used.

(5) Measurement of viscoelasticity:

The viscoelasticity was measured using a device having the following specification. In addition, the storage modulus G' was obtainable from a real number part of the complex modulus.
Device: RMS-800 (manufactured by Rheometrics, Co., Ltd.)
Temperature: 190°C
Distortion: 30%
Frequency: 100 rad/s to 0.01 rad/s

[Production Example 1]

Production of propylene-based multistage polymer

(i) Preparation of pre-polymerization-catalyst component:

After a three-necked flask of 5-liter inner volume equipped with a stirrer underwent treatments of sufficient drying and nitrogen gas substitution, 4 liters of dehydrated heptane and 140 grams of diethyl aluminum chloride were added thereinto. Then, 20 grams of commercially-available Solvay titanium trichloride catalyst (manufactured by Tosoh Finechem Corporation) was added. Thereafter, propylene was continuously added into the flask in which a stirring operation was being performed with the temperature maintained at 20°C. After 80 minutes, the stirring was terminated. Consequently, a pre-polymerization catalyst component was produced in which 0.8 g of propylene was polymerized per gram of titanium trichloride catalyst.

(ii) Polymerization of propylene (1st stage)

After a stainless autoclave of 10-liter inner volume equipped with a stirrer underwent treatments of sufficient drying and nitrogen gas substitution, 6 liters of dehydrated heptane was added and the nitrogen in the system was replaced with propylene. Thereafter, propylene was added into the autoclave in which a stirring operation was being performed. The inside of the system was then stabilized at an inner temperature of 60°C and a total pressure of 0.78 MPa. Subsequently, 50 milliliters of heptane slurry was added into the autoclave, the heptane slurry containing the pre-polymerization catalyst component obtained in the above-mentioned (i) at an amount equivalent to 0.7 grams of the solid catalyst, thereby initiating a polymerization. The yield of the polymer, which was calculated from the integrated value of propylene flow when the propylene was continuously supplied for 35 minutes, was 151 grams. Sampling and analyzing of a part of the polymer proved that the intrinsic viscosity was 14.1 dL/g. After that, the inner temperature was lowered to 40°C or less, the stirring was slowed down, and the pressure was released.

(iii) Polymerization of propylene (2nd stage)

After the pressure is released, the inner temperature was again increased to 60°C and 0.15 MPa of hydrogen was added into the autoclave. Propylene was added thereto while a stirring operation was being performed. Continuously added at a total pressure of 0.78 MPa, the propylene had been polymerized at 60°C for 2.8 hours. At this time, a part of the polymer was sampled and analyzed, and the intrinsic viscosity was 1.16 dL/g.
After the completion of the polymerization, 50 milliliters of methanol was added to the polymer, then the temperature was lowered and the pressure was released. The total contents were transferred to a filtering tank equipped with a filter to add 100 milliliters of 1-butanol, and then the contents were stirred at 85°C for 1 hour for solid-liquid separation. Further, a solid part was washed two times with 6 liters of heptane at 85°C and dried under vacuum, thereby providing 3.1 kg of a propylene-based polymer.
From the above-mentioned result, a polymerization weight ratio of the first stage to the second stage was 12.2/87.8. The intrinsic viscosity of the propylene-based polymer component generated at the second stage was calculated as 1.08 dL/g.
Subsequently, 600 ppm of IRGANOX 1010 (manufactured by Ciba Specialty Chemicals, Co., Ltd.) as an antioxidant and 500 ppm of calcium stearate as a neutralizing agent were added to be mixed therewith in relation to 100 parts by weight of powder of the thus obtained propylene-based multistage polymer. The mixture thereof was melt-mixed by Labo-Plastomill mono-axial extruder (manufactured by Toyo Seiki Seisaku-sho. Ltd., 20 mm in diameter) at a temperature of 230°C to form a propylene-based pellet.

The solid property and resin characteristics of the resultant propylene-based multistage polymer are shown in Table 1.

(Solid property and resin characteristics)

[Table 1]

|  |  | Production Example 1 |
|---|---|---|
| Propylene-based polymer component at 1 st stage | Intrinsic viscosity (dL/g) | 14.1 |
|  | Weight fraction (mass%) | 12.2 |
| Propylene-based polymer component at 2nd stage | Intrinsic viscosity (dL/g) | 1.08 |
|  | Weight fraction (mass%) | 87.8 |
| Propylene-based polymer (pellet form) | Intrinsic viscosity (dL/g) | 2.67 |
|  | MFR (g/10 minutes) | 3.3 |
|  | MT (g) | 7.6 |
| Viscoelastic property | G'(10)/G'(1) | 2.68 |
|  | G'(0.1)/G'(0.01) | 2.96 |

[Example 1]

Production of extruded polypropylene-based resin foam molded product (assembly of bundled threads of extruded foam):

The pellet-shaped propylene-based multistage polymer obtained in Production Example 1 as described above was mixed with a fibrous filler to be a molding material. The fibrous filler used was as follows:

(Fibrous filer)

Material: Glass fiber (MA 486A (trade name) manufactured by ASAHI FIBER GLASS Co., Ltd.)
Average fiber length: 3 mm
Average fiber diameter: 13 $\mu$m

The content of the fibrous filler is 10 wt% with respect to the entire molding material. By use of a tandem-type extrusion foam-molding device disclosed in JP 2004-237729A (having two monoaxial extruders: a monoaxial extruder having a screw diameter of $\phi$ 50 mm and the other monoaxial extruder having a screw diameter of $\phi$ 35 mm) and an assembly of a plurality of circular extrusion orifices (cylindrical dies) as a die, extruded propylene-based resin foam as a plate-shaped assembly of bundled threads of extruded foam was produced in the conditions as described below. In the produced extruded propylene-based resin foam, a plurality of extrusion-foamed threads were bundled together.

Note that the foaming was performed using a 50-mm-diamter monoaxial extruder by an injection of a $CO_2$-supercritical fluid.

Specifically, while the molding material was being melted using the 50-mm-diamter monoaxial extruder, the $CO_2$-supercritical fluid was injected. After the fluid was uniformly and sufficiently dissolved in the molten molding material, the material was extruded from the 35-mm-diameter monoaxial extruder connected thereto such that a resin temperature became 180°C at the die-outlet of the extruder to mold extruded foam. The details of the conditions of the production are described below.

Note that the resin temperature at the die-outlet of the 35-mm-diamter-monoaxial extruder, for example, value obtained by measurement using a thermocouple thermometer may be adopted. The resin temperature may be considered to correspond to the temperature of a foaming molten resin when extruded.

(Production condition)

$CO_2$-supercritical fluid: 7 mass%
Extrusion amount: 8 kg/hr
Resin pressure at upstream of die: 8 MPa
Extrusion temperature at outlet of die: 180°C

The expansion ratio, the average cell diameter, and the closed cell content of the thus-obtained extruded propylene-based resin foam were respectively 26, 180 $\mu$m, and 50% when measured under the following conditions.

(Measurement conditions of average cell diameter and closed cell content)

Expansion ratio: The weight of the molded foam product obtained was divided by the volume thereof defined by a submerging method to obtain a density, and the expansion ratio was then calculated.
Average cell diameter: It was measured based on ASTM D3576-3577.
Closed cell content: It was measured based on ASTM D2856.

(Measurement of energy-absorbing capability)

A stress-strain curve of the extruded propylene-based resin foam was measured.
The compression test was performed using a compression testing machine (TENSILON/CTM-I-5000 (trade name) manufactured by BALDWIN JAPAN LTD.) at 300 K with a compression strain rate of 1.0 x $10^{-2}$/S.

(Measurement of orientation of fibrous filler)

he extruded propylene-based resin foam was cut in the direction perpendicular to the thickness direction, and the orientation angle was then evaluated from the long and short diameter of the elliptical fiber cutting plane in the cross-section of the extruded propylene-based resin foam. When the orientation angle is 45 or less degrees, the filler is assumed to be arranged in the thickness direction of the extruded propylene-based resin foam. A ratio of the number of fibers oriented in the thickness direction to the total number of fibers in the cross-section of the extruded propylene-based resin foam was evaluated.
A large number of foam cells having an average cell diameter of less than 400 $\mu$m were confirmed to be uniformly arranged on the extruded propylene-based resin foam obtained in Example 1.
It was also confirmed that 20 or more % of the total number of fibrous fillers were oriented in the thickness direction of the extruded propylene-based resin foam.
Further, it was observed that a large stress was caused even in response to a small strain in the extruded propylene-based resin foam, and an excellent energy-absorbing capability was confirmed.
In addition, the insulation efficiency was evaluated by use of the ordinary method to obtain good results.
The extruded foam of the present invention was confirmed to have both of an excellent insulation efficiency and energy-absorbing capability.

[Example 2]

The 1-butene copolymer as disclosed in Example 1 of WO 03/070788 was added to the molding material of Example 1. The molding material was prepared by mixing the 1-butene copolymer (a) as disclosed in Example 1 of WO 03/070788 at a weight ratio (a/b) of 15/85 (85 mass% propylene-based multistage polymer and 15 mass% 1-butene copolymer). The physical values and resin characteristics of the 1-butene copolymer are shown in Table 2.
It should be noted that measurement items in Tale 2 were measured such that a loss tangent (tan $\delta$) at a temperature of 298 K and a frequency of 10 Hz was measured using a solid-viscoelasticity measurement device (DMS 6100, manufactured by Seiko Instruments Inc.). In addition, the other items were measured in accordance with the methods described in WO 03/070788.
(Physical values and resin characteristics of 1-butene copolymer)

[Table 2]

| Items | Unit | Measurement results |
|---|---|---|
| Loss tangent (tan δ) (Note 1) | | 1.0 |
| Mesopentad fraction (mmmm) | mol% | 71.2 |
| Stereoregularity index (Note 2) | | 8 |
| Intrinsic viscosity [η] | dL/g | 0.4 |
| Weight average molecular weight ($M_w$) | | $8 \times 10^4$ |
| Molecular weight distribution ($M_w/M_n$) | | 2.0 |
| Melting point ($T_m$-D) | °C | 67 |
| Melt endothermic amount (ΔH) | J/g | 38 |
| Modulus of elongation | MPa | 270 |
| (Note 1) Loss tangent (tan δ) at a temperature of 298 K and a frequency of 10 Hz<br>(Note 2) {mmmm/(mmrr + rmmr)}<br>- Measurement methods are based on the description of WO 03/070788 except for the measurement of loss tangent. | | |

Other conditions are the same as Example 1.
An expansion ratio, an average cell diameter, and a closed cell content of the extruded propylene-based resin foam thus obtained were measured under the same conditions as those of Example 1, and the results were respectively 25, 200 μm, and 48%. It was confirmed that in the extruded propylene-based resin foam, foam cells having an average cell diameter of less than 400 μm were uniformly arranged in an infinite number.
Further, the orientation of the fibrous filler and energy-absorbing capability were also measured under the same conditions as those of Example 1.
It was confirmed that 20 or more % of the total fibers of fibrous fillers were arranged in the thickness direction of the extruded propylene-based resin foam.
The energy-absorbing capability of the extruded propylene-based resin foam was measured and was found to be extremely high.
Further, the insulation efficiency and vibration-suppressive performance of the extruded propylene-based resin foam were also evaluated using the ordinary methods and good results were obtained.
In view of the above, it was confirmed that the extruded propylene-based resin foam had an excellent heat-resistance property, energy-absorbing capability, and vibration-suppressive performance.

INDUSTRIAL APPLICABILITY

The extruded propylene-based resin foam according to the present invention can be advantageously used for structural materials that require insulation efficiencies in the fields of, for example, building construction, civil engineering and the fields of automobiles.

**Claims**

1. Extruded propylene-based resin foam that is produced by extrusion-foaming a molding material containing a propylene-based resin, the extruded propylene-based resin foam having:

   an expansion ratio of 10 or more; and
   an average cell diameter of less than 400 μm, wherein
   the molding material contains a fibrous filler, and
   a content of the fibrous filler is 60 or less wt%.

2. The extruded propylene-based resin foam according to claim 1, wherein 20 or more % of total fibers of the fibrous filler are oriented in a thickness direction that is substantially perpendicular to an extruding direction of the extruded propylene-based resin foam.

3. The extruded propylene-based resin foam according to claim 1 or 2, wherein a closed cell content is 40 or more %.

4. The extruded propylene-based resin foam according to any one of claims 1 to 3, wherein the average cell diameter is 200 μm or less.

5. The extruded propylene-based resin foam according to any one of claims 1 to 4, wherein
   the extruded propylene-based resin foam is an assembly of bundled threads of an extruded foam, in which a plurality of extrusion-foamed threads are bundled.

6. The extruded propylene-based resin foam according to any one of claims 1 to 5, wherein
   the propylene-based resin constituting the extruded foam is a propylene-based multistage polymer made of the following constituents (A) and (B):

   (A) a constituent containing a propylene homopolymer component having an intrinsic viscosity [η] of more than 10 dL/g, which is measured in a tetralin solvent at 135°C or a copolymer component of propylene and α-olefin having carbon number of 2 to 8, the component occupying 5 to 15 mass% of the total polymer; and
   (B) a constituent containing a propylene homopolymer component having an intrinsic viscosity [η] of 0.5 to 3.0 dL/g, which is measured in a tetralin solvent at 135°C or a copolymer component of propylene and α-olefin having carbon number of 2 to 8, the component occupying 85 to 95 mass% of the total polymer.

7. The extruded propylene-based resin foam according to claim 6, wherein a relationship between a melt flow rate (MFR) at 230°C and a melt tension (MT) at 230°C of the propylene-based multistage polymer satisfies the following expression (I):

[Formula 1]

$$\log(MT) > -1.33 \log(MFR) + 1.2 \ .... \ (I)$$

8. The extruded propylene-based resin foam according to any one of claims 1 to 7, wherein the molding material contains an olefin-based polymer in which a loss tangent (tan δ) is 0.04 to 100 at a temperature of 298 K and a frequency of 10 Hz.

9. The extruded propylene-based resin foam according to claim 8, wherein a weight ratio (a/b) of the olefin-based polymer (a) to the propylene-based resin (b) is 1/100 to 80/100.

10. The extruded propylene-based resin foam according to claim 8 or 9, wherein the olefin-based polymer is a 1-butene copolymer satisfying the following conditions (1), (2), and (3):

    (1) an intrinsic viscosity [η] measured in a tetralin solvent at 135°C is 0.01 to 0.5 dL/g;
    (2) a crystalline resin whose melting point ($T_m$-D) is 0 to 100°C, the melting point being defined as the top of peak observed at a highest temperature side of a melting-point endothermic curve by use of a differential scanning calorimeter (DSC), the melting-point endothermic curve is being obtained by heating up at a rate of 10°C/min after keeping a sample at -10°C under nitrogen atmosphere for 5 minutes; and
    (3) a stereoregularity index {(mmmm)/(mmrr + rmmr)} is 30 or less.

11. The extruded propylene-based resin foam according to claim 8 or 9, wherein the olefin-based polymer is a 1-butene copolymer satisfying the following conditions (1'), (2), and (3'):

    (1') an intrinsic viscosity [η] measured in a tetralin solvent at 135°C is 0.25 to 0.5 dL/g;
    (2) a crystalline resin whose melting point ($T_m$-D) is 0 to 100°C, the melting point being defined as the top of peak observed at a highest temperature side of a melting-point endothermic curve by use of a differential scanning calorimeter (DSC), the melting-point endothermic curve being obtained by heating up at a rate of 10°C/min after keeping a sample at -10°C under nitrogen atmosphere for 5 minutes; and
    (3') a mesopentad fraction (mmmm) obtained from a $^{13}$C-nuclear magnetic resonance (NMR) spectrum is 73 or less %.

12. A method for producing extruded propylene-based resin foam according to any one of claims 1 to 11, the method comprising steps of: extruding a molding material from an extrusion die; and vacuum-suctioning propylene-based resin foam extruded from the extrusion die in a direction substantially perpendicular to an extruding direction.

13. The extruded propylene-based resin foam according to any one of claims 1 to 5, wherein the propylene-based resin constituting the extruded foam is a propylene-based multistage polymer made of the following constituents (A) and (B):

    (A) a constituent containing a propylene homopolymer component having an intrinsic viscosity [η] of more than 10 dL/g, which is measured in a tetralin solvent at 135°C or a copolymer component of propylene and α-olefin having carbon number of 2 to 8, the component occupying 5 to 20 mass% of the total polymer; and
    (B) a constituent containing a propylene homopolymer component having a intrinsic viscosity [η] of 0.5 to 3.0 dL/g, which is measured in a tetralin solvent at 135°C or a copolymer component of propylene and α-olefin having carbon number of 2 to 8, the component occupying 80 to 95 mass% of the total polymer.

14. The extruded propylene-based resin foam according to claim 13, wherein a relationship between a melt flow rate (MFR) at 230°C and a melt tension (MT) at 230°C of the propylene-based multistage polymer satisfies the following equation (I):

[Formula 2]

$$\log (MT) > -1.33 \log (MFR) + 1.2 \ .... \ (I)$$

# FIG.1

# FIG.2

# FIG.3

FIG.4

EP 1 813 644 A1

## INTERNATIONAL SEARCH REPORT

| | International application No. |
|---|---|
| | PCT/JP2005/021282 |

A.  CLASSIFICATION OF SUBJECT MATTER
*C08J9/04*(2006.01), *C08F10/06*(2006.01), *C08K7/02*(2006.01), *C08L23/10*
(2006.01)

According to International Patent Classification (IPC) or to both national classification and IPC

B.  FIELDS SEARCHED

Minimum documentation searched (classification system followed by classification symbols)
C08J9/04

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>A | JP 7-292147 A  (Sekisui Chemical Co., Ltd.),<br>07 November, 1995 (07.11.95),<br>Claims; Par. Nos. [0009], [0025], [0027] to<br>[0028]; examples 1 to 5; Par. No. [0048]<br>(Family: none) | 1,3<br>2,4-14 |
| A | JP 2003-94504 A  (Sumitomo Chemical Co., Ltd.),<br>03 April, 2003 (03.04.03),<br>Par. Nos. [0016] to [0026], [0034]<br>(Family: none) | 1-14 |
| A | JP 2002-105256 A  (Grand Polymer Co., Ltd.),<br>10 April, 2002 (10.04.02),<br>Claims; examples 1 to 7; Par. No. [0070]<br>(Family: none) | 1-14 |

| ☒  Further documents are listed in the continuation of Box C. | ☐  See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    20 January, 2006 (20.01.06) | Date of mailing of the international search report<br>    31 January, 2006 (31.01.06) |
|---|---|
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

| | International application No. |
|---|---|
| | PCT/JP2005/021282 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-217755 A (Mitsui Chemicals, Inc.), 05 August, 2004 (05.08.04), Claims; Par. Nos. [0013] to [0016], [0028]; examples 1 to 3; Par. No. [0037] (Family: none) | 1-14 |
| A | JP 9-25354 A (Asahi Chemical Industry Co., Ltd.), 28 January, 1997 (28.01.97), Claims (Family: none) | 1-14 |
| A | JP 9-95550 A (KANEKA Corp.), 08 April, 1997 (08.04.97), Claims; Par. No. [0117]; examples 19 to 21; Par. Nos. [0161], [0196] & WO 1997/005183 A1 & EP 841354 A1 & US 6077878 A | 1-14 |
| A | JP 2000-143858 A (Chisso Corp.), 26 May, 2000 (26.05.00), Claims (Family: none) | 1-14 |
| A | JP 2001-1384 A (KANEKA Corp.), 09 January, 2001 (09.01.01), Claims; examples 1 to 2; Par. Nos. [0035] to [0036] (Family: none) | 1-14 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 9025354 A
- JP 10279632 A
- JP 2000 A
- JP 309670 A
- JP 2000336198 A
- JP 2002012717 A
- JP 2002542360 A
- JP 2002509575 A
- JP 2004237729 A
- WO 03070788 A
- WO 03070790 A
- JP 3255697 B
- JP 2004 A
- JP 237729 A

### Non-patent literature cited in the description

- **ASAKURA et al.** *Polymer Journal,* 1984, vol. 16, 717
- **J. RANDALL et al.** *Macromol. Chem. Phys.,* 1989, vol. C29, 201
- **V. BUSICO et al.** *Marcomol. Chem. Phys.,* 1997, vol. 198, 1257
- **J. C. RANDALL.** *Macromolecules,* 1978, vol. 11, 592